# EUROPEAN PATENT SPECIFICATION

(11) **EP 0 344 750 B1**
(45) Date of publication and mention of the grant of the patent: **07.09.1994**
(21) Application number: 89109848.5
(22) Date of filing: 31.05.1989
(51) Int. Cl.: B04C 3/00, B04C 3/06

(54) **Vortex tube separating device**
Wirbelrohr-Abscheider
Séparateur à tube vortex

(30) Priority: 02.06.1988 ZA 883923; 14.02.1989 ZA 891144
(43) Date of publication of application: 06.12.1989
(73) Proprietor: CYCLOFIL (PROPRIETARY) LIMITED, Pretoria Transvaal Province (ZA)
(72) Inventor: Prinsloo, Willem Johannes Christian, Pretoria Transvaal Province (ZA); De Villiers, Pierre, Hartbeespoort Transvaal Province (ZA); van Dijken, Marten Cornelis, Pretoria Transvaal Province (ZA)
(74) Representative: Cohausz & Florack Patentanwälte

(56) References cited:
- FR-A- 1 278 711
- FR-A- 1 392 667
- FR-A- 2 142 568
- FR-A- 2 274 363
- GB-A- 594 576
- GB-A- 1 465 833
- GB-A- 1 592 051
- US-A- 2 323 707
- US-A- 3 915 679
- US-A- 4 127 396

## Description

THIS INVENTION relates to a separating device suitable for use in treating a particle containing gas flow stream to separate particles from the gas or to clean the gas of particles.

The kind of separating device to which the invention relates, can more precisely be described as a vortex tube particle recovery device or as a vortex tube gas cleaning device, depending on which aspect of its operation emphasis is placed.

FR 1 278 711 discloses an air filter of the general kind described above in which incoming, dust laden air is rotated by means of a vortex generator in an annular passage around a streamlined central body. Relatively clean air is exhausted via a central parallel passage.

In one embodiment, dust separated from the air is conducted past an annular, diverging baffle having an upstream end coinciding with an upstream end of the central parallel passage. The dust accumulates in a closed, cylindrical dust chamber.

In another embodiment, there is provided an outlet in the dust chamber. Thus the dust is carried in a scavenge air stream past the baffle and into the dust chamber to be exhausted via the outlet.

This invention more particularly has in mind the cleaning of gas, especially the cleaning of air. Thus, generally, the term vortex tube gas cleaning device will be used in the specification. However, the invention covers also the particle recovering aspects.

For convenience, references to direction, more specifically "downstream" and "upstream", must be interpreted in relation to the normal direction of flow of gas through the device.

In accordance with this invention, there is provided a method of treating a particle containing gas flow stream to clean the gas of particles or to recover particles from the gas, in a device comprising
an outer round tube having an inlet at one end which will be an upstream end in use and an opposed end which will be a downstream end in use;
an axially arranged vortex or rotating flow generator in the tube downstream of the inlet;
a separation region downstream of the vortex generator;
an inner round extraction tube, arranged concentrically within the outer round tube toward the downstream end of the outer round tube, the inner round tube having an inlet at a predetermined axial position corresponding to the end of the separation region, and central outlet means at a downstream end thereof;
a peripheral outlet region annularly intermediate the outer round tube and the inner round tube;
a central outlet region formed by the inner round tube; and
outlet means downstream of the peripheral outlet region, the method including
introducing the particle containing gas flow stream axially into the outer round tube via its inlet;
inducing rotating flow in the particle containing gas flow stream by guiding it through the vortex generator;
allowing the particles to migrate toward and to concentrate toward the outer periphery of the flow stream while the flow stream flows through the vortex generator and the separation region;
guiding a particle depleted portion of the flow stream, toward the centre of the tube, via the central outlet region through the central outlet means;
guiding a particle enriched portion of the flow stream, toward the outer periphery of the tube, via the peripheral outlet region through the outlet means;
providing an acceleration-deceleration formation in the form of a divergent-convergent ring having, in series, a divergent portion, a crown, and a convergent portion annularly around the inner extraction tube to form in the peripheral outlet region, in series, an annular acceleration region, an annular orifice, and an annular diffuser region;
contracting and accelerating the particle enriched portion of the flow stream in the annular acceleration region in the peripheral outlet region; and
transforming dynamic pressure in the particle enriched flow stream into static pressure by allowing the particle enriched flow stream to diffuse in the annular diffuser region.

Accelerating the particle enriched portion of the flow stream may be by between 50% and 300%, preferably about 100%.

The divergent-convergent ring may axially be spaced from the inlet, contracting and accelerating the particle enriched portion of the flow stream may then commence at a position axially spaced downstream of the inlet, and transforming dynamic pressure into static pressure may terminate at a position axially spaced upstream of an upstream extremity of the outlet means.

Accordingly, the invention extends to a vortex tube gas cleaning device or particle recovery device comprising
an outer round tube having an inlet at one end which will be an upstream end in use and an opposed end which will be a downstream end in use;
an axially arranged vortex or rotating flow generator in the tube downstream of the inlet;
a separation region downstream of the vortex generator;
an inner round extraction tube, arranged concentrically within the outer round tube toward the downstream end of the outer round tube, the inner round tube having an inlet at a predetermined axial position corresponding to the end of the separation region, and central outlet means at a downstream end thereof;
a peripheral outlet region annularly intermediate the outer round tube and the inner round tube;
a central outlet region formed by the inner round tube;
outlet means downstream of the peripheral outlet region; and
an acceleration-deceleration formation in the form of a divergent-convergent ring having, in series, a divergent portion, a crown, and a convergent portion annularly around the inner extraction tube to form in the peripheral outlet region, in series, an annular acceleration region, an annular orifice, and an annular diffuser region.

The divergent portion may commence at a position spaced downstream of the inlet and the convergent portion may terminate at a position spaced upstream of an upstream extremity of the outlet means.

The included angle of the divergent portion may be between 60° and 135°, preferably about 90°.

The convergent portion may be formed by a divergence or flaring of the inner round extraction tube. The included angle of flaring or divergence of the inner round extraction tube may be between about 60° and about 135°, preferably about 90°.

The ratio of the flow areas immediately upstream and downstream of the acceleration region and the crown may be between 1.5 : 1 and 4 : 1, preferably about 2 : 1.

Further, by way of development, the inlet to the inner round extraction tube may be in the form of a mouth of aerodynamic shape which has a sharp leading edge and a lip curving inwardly from the leading edge, the radius of curvature of the lip being larger than the thickness of the inner round extraction tube such that a tangent to the lip at the leading edge and extending inwardly and downstream, forms an acute angle with the inner peripheral of the inner tube. Preferably, the acute angle may lie in the range of 30° to 50°.

The invention is now described by way of example with reference to the accompanying diagrammatic drawings. In the drawings
Figure 1 shows, in axial section, a vortex tube particle recovery device in accordance with the invention; and
Figure 2 shows, fragmentarily, to a larger scale, in axial section, flow through a portion of the device of Figure 1.

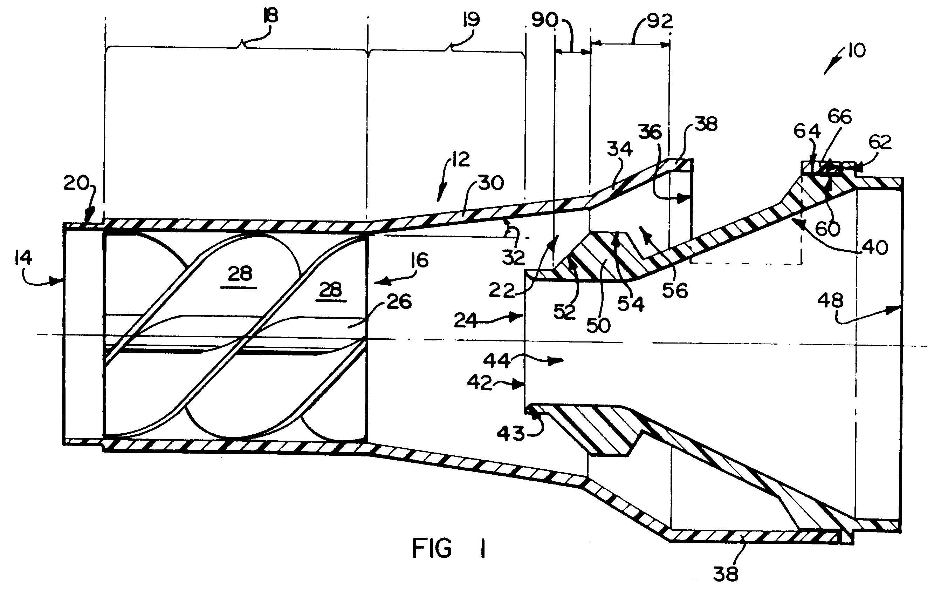

With reference to Figure 1 of the drawings, a vortex tube gas cleaning device is generally indicated by reference numeral 10. The device 10 is generally of symmetrical round shape and is assembled of different components of moulded synthetic plastics material. In other embodiments, the devices may be of other materials, such as materials which are abrasion resistant, corrosion resistant or non-corrosive, e.g. suitable types of steel.

The device 10 comprises an outer round tube generally indicated at 12, a vortex generator 16 fitting snugly within the tube 12 toward one end and an outlet core in the form of an inner round extraction tube 40 fitted co-axially within the tube 12 toward the opposed end. The end having the vortex generator will in use be the upstream end, and the opposed end will be the downstream end.

At said upstream end, the tube 12 has an inlet 14. From the inlet 14, the tube 12 extends parallel for a portion of its length to define a vortex generating region 18 within which the vortex generator 16 is located. At its upstream end, the tube 12 has a mounting formation in the form of a recess 20.

The vortex generator 16 has a central core or chine 26 and a pair of helical blades 28 arranged around the core 26, auger fashion. Each blade curves through an angle of 180°. At their peripheries, each blade is at an angle of 57° with the axis.

Downstream of the vortex generating region 18, the wall of the tube 12 diverges as indicated at 30 for a predetermined distance. The included angle of divergence is equal to twice the angle 32 between the diverging wall and the axis of the device 10. The angle 32 is 5° and the included angle is thus 10°.

Downstream of the divergent portion 30, the tube diverges more sharply to form a diffuser wall, which will be described in more detail hereinafter, generally indicated by reference numeral 34.

Downstream of the diffuser wall 34, the tube 12 is parallel as indicated at 38. A single outlet port 36 which extends around a portion of the circumference through an angle of about 120°, is provided in the tube 12 in the parallel portion 38. Instead of a single port, a plurality of circumferentially spaced ports may be provided.

The extraction tube 40 has at an upstream end an inlet 42 identified by its leading edge and which leads into a central passage 44 which blends into a diffuser and extends to an outlet 48 of the extraction tube 40.

The inlet 42 is at a predetermined axial position of the device 10. A separation region 19 is formed between the downstream end of the vortex generator and the inlet 42. In this embodiment, the separation region 19 is divergent as described above. In other embodiments, the separation regions may be parallel.

Downstream of the separation region 19, an outer peripheral or scavenge region 22 is formed annularly between the inner extraction tube 40 and the outer tube 12; and a central or main outlet region 24 is formed bounded by the inner extraction tube 40. Both the scavenge region 22 and the main outlet region 24 are downstream of the separation region 19.

An annular inlet to the scavenge region 22 is formed around the leading edge 42. Closely spaced downstream of said annular inlet, a ring 50 which is integral with the inner extraction tube 40 projects into the scavenge region 22. The ring 50 forms an oblique leading wall 52 which, in use, contracts the flow in an acceleration region 90 in the scavenge region toward an annular orifice 54 defined annularly outside the crown of the ring 50. The oblique leading wall 52 forms a frusto conical surface having an included angle lying in the range of about 60° to about 135°, generally about 90°.

The diverging wall portion 34 forms a diffuser region 92 in the scavenge region 22 downstream of the acceleration region 90.

Toward its downstream end, the inner extraction tube 40 forms a spigot portion 60, which may be slightly taper if desired. The spigot 60 terminates in an outwardly extending flange having a shoulder 62. The spigot 60 fits snugly within the end portion 64 of the tube 12 and the end 66 of the tube 12 checks the shoulder 62. Thus, the inner extraction tube 40 is concentrically and axially located relative to the outer tube 12. The inner extraction tube 40 extends cantilever fashion in an upstream direction to render the scavenge region 22 uninterrupted or continuous. Thus the flow passage through the scavenge region 22 including the annular orifice 54 is likewise uninterrupted or continuous.

In use, a particle containing gas flow stream is introduced into the tube 12 via the inlet 14. Rotating flow is induced in the flow stream by the vortex generator 16 while the flow stream moves through the vortex generating region 18. When the rotating flow stream enters the separation region 19, it diffuses outwardly as allowed by the divergence 32.

The rotating nature of the flow stream causes centrifugal forces to act on the particles, which are heavier than the gas in the flow stream, and to induce the particles to migrate outwardly and concentrate toward the outer periphery of the flow stream.

Generally, the particles are concentrated or enriched in the peripheral portion of the flow stream and the central portion of the flow stream is depleted of particles.

As the particle enriched peripheral portion of the flow stream flows into the scavenge region 22, it is first accelerated as it is contracted in the acceleration region 90 along the oblique wall 52 into the orifice 54, and is thereafter decelerated in the diffuser region 92 along the diffuser wall 34. The particle enriched portion of the flow stream moves into a plenum 56 from where it exits via the outlet port 36, or via the plurality of circumferentially spaced ports if those are provided instead.

The particle depleted portion of the flow stream enters the central or main outlet region via the inlet 42, is diffused in the diffuser and exits via the outlet 48.

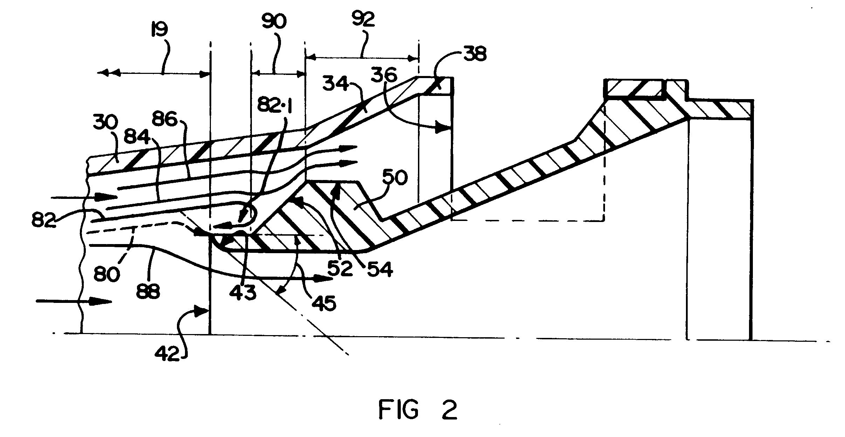

With reference also to Figure 2, the inlet 42 has an inwardly curved lip 43 leading inwardly and downstream from its leading edge. The radius of curvature of the lip 43 is more than the thickness of the inner tube 40 at the inlet 42 resulting in the lip having a tangent, at the leading edge, at an acute angle to the axis of the device 10. In this embodiment, the acute angle is about 40° as indicated at 45. From the inwardly curved lip, the inner periphery of the extraction tube 30 extends parallel for a short distance and then diverges to form a diffuser downstream of the inlet 42.

With reference more specifically to Figure 2, flow lines of the flow stream through the device 12 are shown in solid lines. Intuitively, one would expect that there will be one flow line 80 which ends on the leading edge 42. Particles entrained in flow elements radially outwardly of said flow line 80 would flow through the annular peripheral outlet region to form part of the particle enriched flow stream such as those indicated by flow lines 84 and 86. Conversely, flow elements radially inwardly of the flow line 80 and which have little or no particles entrained therein would flow into the central outlet region to form part of the particle depleted flow stream such as indicated by flow line 88. However, the Inventors have found such an hypothesis to be incorrect!

The Inventors do not wish to be bound by theory. However, it is believed that a theoretical explanation of flow in the peripheral outlet region will enhance the understanding of the invention.

In a rotating flow field, static pressure increases with radial position from an axis of the rotating flow field. Thus, static pressure forces tend to urge flow elements inwardly. Centrifugal forces on elements in the flow field act in the opposite direction and tend to urge elements outwardly. In the case of heavier particles, the centrifugal forces dominate and such particles move outwardly in the flow field. In the case of lighter flow elements such as the gas components, the pressure forces dominate and urge such elements or such flow inwardly. This is the reason why the heavier particles in the particle containing gas flow stream concentrate outwardly toward the periphery of the flow stream.

However, when a flow element in the flow stream impinges on an obstruction, such as a wall, the rotational nature of its flow ceases and thus the centrifugal forces cease to act on such element. However, the pressure gradient is still present and urges such element inwardly.

The divergence 52, or the boundary layer associated with the divergence 52 acts as such an obstruction. Thus, flow elements impinging upon the divergence 52 or on its boundary layer will be subjected to a pressure gradient tending to move such element inwardly and thus also slightly upstream, i.e. into the particle depleted flow stream. Such flow tendency is illustrated by flow line 82 and more specifically at 82.1. Theoretically, such a flow line exists for which the forces at the point of impingement balance i.e. it will move neither forward nor in reverse. This point of impingement is known as the point of reverse flow or flow reversal.

Particles in the scavenge region are entrained into the reverse flow, thereby reducing the efficiency of separation.

The Inventors have found that, by accelerating the particle enriched flow stream in the acceleration region 90, the point of flow reversal is moved upstream and radially inwardly. Thus, acceleration of the particle enriched flow stream ameliorates the undesirable tendency of flow reversal described above.

In the diffuser region 92, static pressure is gained at the expense of dynamic or kinetic pressure. Such gaining of static pressure at the expense of kinetic or dynamic pressure reduces the pressure drop between the inlet 14 and the outlet part 36 and thus increases the efficiency of the device 10 from an energy consumption point of view.

The Inventors have found in tests that the aero-dynamic shape of the inlet 42 causes a substantial decrease in total pressure drop equal to about 15% of the total pressure drop compared to other devices which are not in accordance with this aspect of the invention. Instead of enjoying the benefit of the pressure drop, this allows one the option of using an extraction tube of smaller inner diameter which gives rise to a higher total mass efficiency and without an increase in pressure drop, compared to other devices known to the Inventors.

The Inventors have further established that the flow characteristics of the device are much more stable compared to other devices known to them. In such other devices known to them it was found that instability in the form of fluctuations in total pressure drop and volume flow is an inherent characteristic. In other devices, fluctuations of the point of flow reversal result in more contamination of the particle depleted flow stream by particles from the scavenge region. In devices of the invention, such fluctuations were at least reduced, in most cases substantially eliminated, and the adverse contamination was likewise at least reduced and in most cases substantially eliminated.

In a test sample of the general configuration as illustrated, having an included angle of divergence of 7°, an outer tube inner diameter of 18 mm, a total length of 60 mm, a vortex generating region length of 20 mm, a vortex angle of 180° and a central orifice inner diameter of 10 mm, and operating at a total pressure drop of 4 inch standard water gauge (about 1 kPa) and an air mass flow of 4,6 gram per second, a total mass efficiency of dust removal of about 97% was obtained for AC coarse dust and operating at a 100% cut, i.e. no scavenge flow.

For the same sample, and operating at 90% cut, the total pressure drop was 4 inch standard water gauge (about kPa), the air mass flow was 4,6 gram per second in the main flow stream, and the separation efficiency was more than 98%.

Both tests were done with AC coarse dust.

The Inventors have made inventive contributions to a number of aspects of separating devices of the kind to which this invention relates. The instant invention emphasises primarily one such aspect namely the acceleration of flow in the outer peripheral region, and the subsidiary and related aspect of an aerodynamic central inlet. It is to be appreciated that the features of the current invention, together with features emphasized in co-pending applications by the same inventors, give rise to a number of advantages. Herein, those advantages to which the current invention contributes substantially, are highlighted. It is to be appreciated that the features of the current invention in isolation, are not necessarily the sole factors in the advantages mentioned.

## Claims

1. A method of treating a particle containing gas flow stream to clean the gas of particles or to recover particles from the gas, in a device (10) comprising
an outer round tube (12) having an inlet (14) at one end which will be an upstream end in use and an opposed end (66) which will be a downstream end in use;
an axially arranged vortex or rotating flow generator (16) in the tube (12) downstream of the inlet (14);
a separation region (19) downstream of the vortex generator (16);
an inner round extraction tube (40), arranged concentrically within the outer round tube (12) toward the downstream end (66) of the outer round tube (12), the inner round tube (40) having an inlet (42) at a predetermined axial position corresponding to the end of the separation region (19), and central outlet means (48) at a downstream end thereof;
a peripheral outlet region (22) annularly intermediate the outer round tube (12) and the inner round tube (40);
a central outlet region (24) formed by the inner round tube 40; and
outlet means (36) downstream of the peripheral outlet region (22),
the method including
introducing the particle containing gas flow stream axially into the outer round tube (12) via its inlet (14);
inducing rotating flow in the particle containing gas flow stream by guiding it through the vortex generator (16);
allowing the particles to migrate toward and to concentrate toward the outer periphery of the flow stream while the flow stream flows through the vortex generator (16) and the separation region (19);
guiding a particle depleted portion of the flow stream, toward the centre of the tube (12), via the central outlet region (24) through the central outlet means (48); and
guiding a particle enriched portion of the flow stream, toward the outer periphery of the tube (12), via the peripheral outlet region (22) through the outlet means (36),
characterized by
providing an acceleration-deceleration formation in the form of a divergent-convergent ring (50) having, in series, a divergent portion (52), a crown (54), and a convergent portion annularly around the inner extraction tube (40) to form in the peripheral outlet region (22), in series, an annular acceleration region (90), an annular orifice (54), and an annular diffuser region, and by the step of contracting and accelerating the particle enriched portion of the flow stream in the annular acceleration region (90) in the peripheral outlet region (22) and the step of transforming dynamic pressure in the particle enriched flow stream into static pressure by allowing the particle enriched flow stream to diffuse in the annular diffuser region.

2. A method as claimed in Claim 1 characterized by accelerating the particle enriched portion of the flow stream by between 50% and 300%.

3. A method as claimed in Claim 1 or Claim 2 characterized in that the divergent-convergent ring (50) is axially spaced from the inlet (42), and in that the step of contracting and accelerating the particle enriched portion of the flow stream commences at a position axially spaced downstream of the inlet (42), and in that the step of transforming dynamic pressure into static pressure terminates at a position axially spaced upstream of an upstream extremity of the outlet means (36).

4. A vortex tube gas cleaning device (10) or particle recovery device (10) comprising
an outer round tube (12) having an inlet (14) at one end which will be an upstream end in use and an opposed end (66) which will be a downstream end in use;
an axially arranged vortex or rotating flow generator (16) in the tube (12) downstream of the inlet (14);
a separation region (19) downstream of the vortex generator (16);
an inner round extraction tube (40), arranged concentrically within the outer round tube (12) toward the downstream end (66) of the outer round tube (12), the inner round tube (40) having an inlet (42) at a predetermined axial position corresponding to the end of the separation region (19), and central outlet means (48) at a downstream end thereof;
a peripheral outlet region (22) annularly intermediate the outer round tube (12) and the inner round tube (40);
a central outlet region (24) formed by the inner round tube 40; and
outlet means (36) downstream of the peripheral outlet region (22),
characterized in that there is provided an acceleration-deceleration formation in the form of a divergent-convergent ring (50) having, in series, a divergent portion (52), a crown (54), and a convergent portion annularly around the inner extraction tube (40) to form in the peripheral outlet region (22), in series, an annular acceleration region (90), an annular orifice (54), and an annular diffuser region.

5. A device (10) as claimed in Claim 4 characterized in that the divergent portion (52) commences at a position spaced downstream of the inlet (42) and in that the convergent portion terminates at a position spaced upstream of an upstream extremity of the outlet means (36).

6. A device as claimed in Claim 4 or Claim 5 characterized in that the included angle of the divergent portion (52) is between 60° and 135°.

7. A device as claimed in Claim 4 or Claim 5 or Claim 6 characterized in that the ratio of the flow areas immediately upstream and downstream of the acceleration region (90) and the crown (54) is between 1.5 : 1 and 4 : 1.

8. A device as claimed in any one of Claim 4 to Claim 7 inclusive characterized in that the inlet (42) to the inner round extraction tube (40) is in the form of a mouth (43) of aerodynamic shape which has a sharp leading edge (42) and a lip (43) curving inwardly from the leading edge (42), the radius of curvature of the lip (43) being larger than the thickness of the inner round extraction tube (40) such that a tangent to the lip (43) at the leading edge (42) and extending inwardly and downstream, forms an acute angle (45) with the inner periphery of the inner tube (40).

9. A device as claimed in Claim 8 characterized in that the acute angle (45) lies in the range of 30° to 50°.

## Patentansprüche

1. Verfahren zum Behandeln eines Partikel enthaltenden Gasstromes zur Reinigung des Gases von Partikeln oder zur Wiedergewinnung der Partikel aus dem Gas in einer Vorrichtung (10), die umfaßt
ein äußeres rundes Rohr (12) mit einem Einlaß (14) an einem Ende, das im Betrieb ein aufstromseitiges Ende ist, und einem gegenüberliegenden Ende (66), das im Betrieb ein abstromseitiges Ende ist;
einen axial angeordneten Wirbel- oder Rotationsstromerzeuger (16) im Rohr (12) abstromseitig des Einlasses (14);
einen Trennbereich (19) abstromseitig des Wirbelerzeugers (16);
ein inneres rundes Extraktionsrohr (40), das konzentrisch innerhalb des äußeren runden Rohres (12) zum abstromseitigen Ende (66) des äußeren runden Rohres (12) hin angeordnet ist und einen Einlaß (42) in einer vorgegebenen Axialposition entsprechend dem Ende des Trennbereiches (19) sowie zentrale Auslaßeinrichtungen (48) an einem abstromseitigen Ende desselben aufweist;
einen peripheren Auslaßbereich (22), der ringförmig zwischen dem äußeren runden Rohr (12) und dem inneren runden Rohr (40) angeordnet ist;
einen zentralen Auslaßbereich (24), der durch das innere runde Rohr (40) gebildet ist; und
Auslaßeinrichtungen (36) abstromseitig des peripheren Auslaßbereiches (22),
wobei das Verfahren die folgenden Schritte umfaßt Einführen des die Partikel enthaltenden Gasstromes in Axialrichtung in das äußere runde Rohr (12) über dessen Einlaß (14);
Induzieren eines Rotationsstromes im Partikel enthaltenden Gasstrom durch Führen des Stromes durch den Wirbelerzeuger (16);
Wandern- und Konzentrierenlassen der Partikel zum Außenumfang des Stromes, während dieser durch den Wirbelerzeuger (16) und den Trennbereich (19) fließt;
Führen eines von Partikeln befreiten Abschnittes des Stromes in Richtung auf die Mitte des Rohres (12) über den zentralen Auslaßbereich (24) durch die zentralen Auslaßeinrichtungen (48); und
Führen eines mit Partikeln angereicherten Abschnittes des Stromes in Richtung auf den Außenumfang des Rohres (12) über den peripheren Auslaßbereich (22) durch die Auslaßeinrichtungen (36),
gekennzeichnet durch
Vorsehen eines Beschleunigungs-Verzögerungs-Gebildes in der Form eines divergierenden-konvergierenden Ringes (50), der nacheinander einen divergierenden Abschnitt (52), einen Scheitel (54) und einen konvergierenden Abschnitt ringförmig um das innere Extraktionsrohr (40) herum aufweist, um im peripheren Auslaßbereich (22) nacheinander einen ringförmigen Beschleunigungsbereich (90), eine ringförmige Öffnung (54) und einen ringförmigen Diffusorbereich auszubilden, und
Kontrahieren und Beschleunigen des mit Partikeln angereicherten Abschnittes des Stromes im ringförmigen Beschleuinigungsbereich (90) im peripheren Auslaßbereich (22) sowie
Umwandeln des dynamischen Drucks im mit Partikeln angereicherten Strom in statischen Druck, indem man den mit Partikeln angereicherten Strom in den ringförmigen Diffusorbereich diffundieren läßt.

2. Verfahren nach Anspruch 1, gekennzeichnet durch das Beschleunigen des mit Partikeln angereicherten Abschnittes des Stromes um zwischen 50% und 300%.

3. Verfahren nach Anspruch 1 oder 2, dadurch gekennzeichnet, daß der divergierende-konvergierende Ring (50) axial vom Einlaß (42) beabstandet ist, daß der Schritt des Kontrahierens und Beschleunigens des mit Partikeln angereicherten Abschnittes des Stromes an einer Stelle beginnt, die axial abstromseitig vom Einlaß (42) beabstandet ist, und daß der Schritt des Umwandelns des dynamischen Drucks in statischen Druck an einer Stelle beendet wird, die axial aufstromseitig eines aufstromseitigen Endes der Auslaßeinrichungen (36) beabstandet ist.

4. Wirbelrohrgasreinigungsvorrichtung (10) oder Partikelwiedergewinnungsvorrichtung (10) mit einem äußeren runden Rohr (12), das einen Einlaß (14) an einem Ende, das im Betrieb ein aufstromseitiges Ende ist, und ein gegenüberliegendes Ende (66), das im Betrieb ein abstromseitiges Ende ist, aufweist;
einem axial angeordneten Wirbel- oder Rotationstromerzeuger (16) im Rohr (12) abstromseitg des Einlasses (14);
einem Trennbereich (19) abstromseitig des Wirbelerzeugers (16);
einem inneren runden Extraktionsrohr (40), das konzentrisch innerhalb des äußeren runden Rohres (12) in Richtung auf das abstromseitige Ende (66) des äußeren runden Rohres (12) angeordnet ist und einen Einlaß (42) in einer vorgegebenen Axialposition entsprechend dem Ende des Trennbereiches (19) sowie zentrale Auslaßeinrichtungen (48) an einem abstromseitigen Ende desselben aufweist;
einem peripheren Auslaßbereich (22), der ringförmig zwischen dem äußeren runden Rohr (12) und dem inneren runden Rohr (40) angeordnet ist;
einem zentralen Auslaßbereich (24), der durch das innere runde Rohr (40) gebildet wird; und
Auslaßeinrichtungen (36) abstromseitig des peripheren Auslaßbereiches (22),
dadurch gekennzeichnet, daß ein Beschleunigungs-Verzögerungs-Gebilde in der Form eines divergierenden-konvergierenden Ringes (50) vorgesehen ist, das nacheinander einen divergierenden Abschnitt (52), einen Scheitel (54) und einen konvergierenden Abschnitt ringförmig um das innere Extraktionsrohr (40) herum aufweist, um im peripheren Auslaßbereich (22) nacheinander einen ringförmigen Beschleunigungsbereich (90), eine ringförmige Öffnung (54) und einen ringförmigen Diffusorbereich auszubilden.

5. Vorrichtung (10) nach Anspruch 4, dadurch gekennzeichnet, daß der divergierende Abschnitt (52) an einer Stelle beginnt, die abstromseitig vom Einlaß (42) beabstandet ist, und daß der konvergierende Abschnitt an einer Stelle endet, die aufstromseitg von einem aufstromseitigen Ende der Auslaßeinrichtungen (36) beabstandet ist.

6. Vorrichtung nach Anspruch 4 oder 5, dadurch gekennzeichnet, daß der eingeschlossene Winkel des divergierenden Abschnittes (52) zwischen 60° und 135° beträgt.

7. Vorrichtung nach Anspruch 4 oder 5 oder 6, dadurch gekennzeichnet, daß das Verhältnis zwischen den Strömungsquerschnitten unmittelbar aufstromseitig und abstromseitig des Beschleunigungsbereiches (90) und des Scheitels (54) zwischen 1,5:1 und 4:1 liegt.

8. Vorrichtung nach einem der Ansprüche 4 bis 7, dadurch gekennzeichnet, daß der Einlaß (42) zum inneren runden Extraktionsrohr (40) die Form einer Mündung (43) aerodynamischer Gestalt besitzt, die einen scharfen Vorderrand (42) und eine Lippe (43) aufweist, die sich vom Vorderrand (42) nach innen krümmt, wobei der Krümmungsradius der Lippe (43) größer ist als die Dicke des inneren runden Extraktionsrohres (40), so daß eine Tangente an die Lippe (43) am Vorderrand (42), die sich nach innen und nach unten erstreckt, einen spitzen Winkel (45) mit dem Innenumfang des inneren Rohres (40) bildet.

9. Vorrichtung nach Anspruch 8, dadurch gekennzeichnet, daß der spitze Winkel (45) in einem Bereich von 30° bis 50° liegt.

## Revendications

1. Procédé d'épuration d'un écoulement de gaz des particules qu'il contient, ou de récupération de particules contenues dans un écoulement de gaz, dans un dispositif (10) comprenant
un tube extérieur rond (12) pourvu d'une entrée (14) qui constituera l'extrémité amont en utilisation et d'une sortie (66) qui constituera une extrémité aval en utilisation ;
un générateur de tourbillon ou d'écoulement rotatif (16) monté de façon axiale dans le tube (12) en aval de l'entrée (14) ;
une zone de séparation (19) en aval du générateur de tourbillon (16);
un tube d'extraction intérieur rond (40) monté de façon concentrique à l'intérieur du tube extérieur rond (12) vers l'extrémité aval (66) de celui-ci, le tube intérieur (40) étant pourvu d'une entrée (42) à une position axiale prédéterminée correspondant à l'extrémité de la zone de séparation (19) et un moyen de sortie central (48) à son extrémité aval ;
une région de sortie périphérique annulaire (22) se trouvant entre le tube extérieur (12) et le tube intérieur (40) ;
une zone de sortie centrale (24) définie par le tube intérieur (40) ; et
des moyens de sortie (36) en aval de la zone de sortie périphérique (22) ;
le procédé comprenant les étapes de :
- l'introduction du flux d'écoulement de gaz contenant des particules axialement dans le tube extérieur rond (12) par l'entrée (14) de celui-ci ;
- la formation d'un écoulement rotatif dans le flux d'écoulement de gaz contenant des particules en dirigeant celui-ci à travers le générateur de tourbillon (16) ;
- la migration et la concentration des particules vers la périphérie extérieure de l'écoulement, tandis que le flux d'écoulement s'écoule à travers le générateur de tourbillon (16) et la zone de séparation (19) ;
- le guidage d'une partie du flux d'écoulement appauvrie en particules vers le centre du tube (12) via la zone de sortie centrale (24) à travers le moyen de sortie central (48), et
- le guidage d'une partie du flux d'écoulement enrichie en particules vers la périphérie extérieure du tube (12), via la zone de sortie périphérique (22) à travers les moyens de sortie (36) ;
caractérisé en ce qu'il comprend une formation d'accélération-décélération constituée par une bague divergente-convergente (50) comprenant successivement une portion divergente (52), une couronne (54) et une portion convergente disposée annulairement autour du tube d'extraction interne (40) pour former dans la zone de sortie périphérique (22), successivement, une région annulaire d'accélération (90), un orifice annulaire (54) et une zone de diffusion annulaire, et en ce qu'il comprend l'étape de contraction et d'accélération de la partie du flux d'écoulement enrichie en particules dans le zone annulaire d'accélération (90) dans la zone de sortie périphérique (22), et l'étape de transformation de la pression dynamique dans le flux d'écoulement enrichi en particules en pression statique en permettant audit flux de se diffuser dans ladite zone annulaire de diffusion.

2. Procédé selon la revendication 1, caractérisé par une accélération de la partie du flux d'écoulement enrichie en particules comprise entre 50 % et 300 %.

3. Procédé selon l'une des revendications 1 et 2, caractérisé en ce que la bague divergente-convergente (50) est espacée axialement de l'entrée (42) et en ce que l'étape de contraction et d'accélération de la portion enrichie en particules du flux d'écoulement commence en une position espacée axialement en aval de l'entrée (42) et en ce que l'étape de la transformation de la pression dynamique en pression statique se termine en une position espacée axialement vers l'amont d'une extrémité amont des moyens de sortie (36).

4. Dispositif d'épuration de gaz à tube à tourbillon ou dispositif de récupération de particules (10) comprenant
un tube extérieur rond (12) pourvu d'une entrée (14) qui constituera l'extrémité amont et d'une sortie (16) qui constituera l'extrémité aval en utilisation ;
un générateur de tourbillon ou d'écoulement rotatif (16) monté axialement dans le tube (12) en aval de l'entrée (14) ;
une zone de séparation (19) en aval du générateur de tourbillon (16);
un tube d'extraction intérieur rond (40) monté de façon concentrique à l'intérieur du tube extérieur rond (12) vers l'extrémité aval (66) de celui-ci, le tube intérieur (40) étant pourvu d'une entrée (42) à une position axiale prédéterminée correspondant à l'extrémité de la zone de séparation (19) et un moyen de sortie central (48) à son extrémité aval ;
une région de sortie périphérique (22) annulaire se trouvant entre le tube rond extérieur (12) et le tube rond intérieur (40) ;
une zone de sortie centrale (24) définie par le tube intérieur (40) ; et
des moyens de sortie (36) en aval de la zone de sortie périphérique (22)
caractérisé en ce qu'il comprend une formation d'accélération-décélération constituée par une bague divergente-convergente (50) comprenant successivement, une portion divergente (52), une couronne (54) et une portion convergente, annulairement autour du tube d'extraction interne (40) pour former dans la zone de sortie périphérique (22), successivement, une zone annulaire d'accélération (90), un orifice annulaire (54) et une zone annulaire de diffusion.

5. Dispositif selon la revendication 4, caractérisé en ce que la portion divergente (52) commence à une position espacée vers l'aval de l'entrée (42) et en ce que la portion convergente se termine à une position espacée vers l'amont d'une extrémité amont des moyens de sortie (36).

6. Dispositif selon l'une des revendications 4 et 5, caractérisé en ce que l'angle inclus de la portion divergente (52) est compris entre 60° et 135°.

7. Dispositif selon l'une des revendication 4 à 6, caractérisé en ce que le rapport des surfaces d'écoulement immédiatement en amont et en aval de la zone d'accélération (90) et de la couronne (54) est compris entre 1,5/1 et 4/1.

8. Dispositif selon l'une des revendications 4 à 7, caractérisé en ce que l'entrée (42) du tube d'extraction intérieur rond (40) est en forme de bouche (43) à profil aérodynamique et pourvue d'un bord d'attaque aigu (42) et d'une lèvre (43) s'incurvant vers l'intérieur à partir du bord d'attaque (42), le rayon de courbure de la lèvre (43) étant supérieur à l'épaisseur du tube d'extraction intérieur (40), de telle sorte qu'une tangente à la lèvre (43) au bord d'attaque (42) et s'étendant vers l'intérieur et en aval, forme un angle aigu (45) avec la périphérie intérieure du tube intérieur (40).

9. Dispositif selon la revendication 8, caractérisé en ce que l'angle aigu (45) a une valeur comprise entre 30° et 50°.
